# EUROPEAN PATENT APPLICATION

(11) **EP 3 569 643 A1**
(43) Date of publication of application: **20.11.2019**
(21) Application number: 17890999.0
(22) Date of filing: 09.08.2017
(51) Int. Cl.: C08J 3/20, C08J 3/28, C08K 3/10, C08K 3/00, B32B 27/08, B32B 27/18, C08K 3/04, C08K 7/02, B01F 3/12, B01F 11/02

(54) **METHOD FOR PREPARING NANOSILVER PARTICLE-IMMERSED NANOSILVER ORGANIC-INORGANIC COMPOSITE RESIN AND ANTIBIOTIC WATER PIPE MANUFACTURED BY USING SAME**

(30) Priority: 12.01.2017 KR 20170005360
(71) Applicant: Terraheim Co., Ltd., Seoul 06724 (KR)
(72) Inventor: LEE, Hae Kyung, Seongnam-si Gyeonggi-do 13616 (KR); LEE, Jung Hoon, Gunsan-si Jeollabuk-do 54004 (KR)
(74) Representative: Weber, Jean-François
(86) International application number: PCT/KR2017/008614
(87) International publication number: WO 2018/131767

(57) **Abstract**

The present invention relates to a method for manufacturing a nanosilver organic-inorganic composite resin and an antibiotic water pipe manufactured by using the same, wherein the nanosilver organic-inorganic composite resin has excellent anti-biological properties since nanosilver synthetic ceramic particles having anti-bacterial properties are very homogenously dispersed and strongly fixed.

## Description

### FIELD OF THE INVENTION

The present invention relates to a method for manufacturing an organic-inorganic composite resin containing nano-silver particles and an antibiotic water pipe manufactured by using the same, wherein the organic-inorganic composite resin containing nano-silver particles has excellent anti-biological properties since nano silver-ceramic particles having anti-bacterial properties are very homogenously dispersed and strongly fixed therein.

### BACKGROUND OF THE INVENTION

Copper and iron are generally used as metal antimicrobial agents for water pipes for economic reason. The antimicrobial fundamental of the two metals is that they react with dissolved oxygen in water to produce strong oxidant radicals, such as hydroxyl radicals(OH⁻) and superoxide radicals(O₂⁻), which causes antimicrobial effect. However, in case of iron, there is a risk of occurrence of rust as time progresses, and in case of copper, corrosion may arises on the outer surface of the pipe due to the sulfur component in soil. Copper and iron are not applied for water pipe for above reason.

Silver or silver ion has been well known for a long time to exhibit an antimicrobial effect, and it is a metal antimicrobial material in the spotlight in the field of hygiene goods and medical field as a representative material satisfying various requirements for antimicrobial material.

Plastic water pipes developed until now are manufactured by mixing heat stabilizer, impact reinforcing agent, lubricant, and etc. with polymer resin and then extruding the mixture. Additionally, an organic, inorganic, organic-inorganic, or photocatalytic antimicrobial agent can be added to form antimicrobial water pipes.

Conventional water pipes having antimicrobial effect are manufactured by a method which comprises producing antimicrobial agent composed of various materials with certain ratio by an ordinary method that can be implemented easily by a skilled person in fields related to chemistry and materials, admixing the antimicrobial agent, dispersant and other additives with a resin as water pipe material, and then manufacturing pipes, or by a method which comprises coating the antimicrobial agent on the inner and outer surface of water pipes.

As the relevant prior art, KR patent No. 10-0981118 discloses a water pipe having triple walls manufactured by admixing and blending silver powder as antimicrobial material and various organic-inorganic additives twice in certain weight ratio, and then producing water pipes from the mixture. Although this prior art described that the use of resin master batch improves the dispersion of silver powder due to lack of static electricity, but since the aggregation phenomenon is hardly eliminated in simple stirrer-mixing, there is a disadvantage that the antimicrobial effect is significantly low relative to an amount of the silver power used.

KR patent No. 10-1128054 discloses an anti-bacterial composition containing ceramics for water pipes and the manufacturing method in which hornblende and amethyst as antimicrobial materials are ground to size of 15-40 mm, calcinated at 650-1,450°C for 1-4 hours, sterilized, re-ground into 120-250 mesh sized power, mixed with PE resin as pipe material in certain weight ratio, and used as inner pipe in final extrusion phase.

KR patent No. 10-0797189 discloses an impact-resistant triple-walled water pipe with antimicrobial effect, in which the water pipe with improved durability and strength is manufactured by producing antimicrobial ingredient using zeolite and sterilizer as antimicrobial materials and admixing it with PVC resin and various chemical additives.

Each of above-mentioned prior arts uses pre-determined manufacturing factors such as proper input amount, temperature, and time, and also using preselected, respectively characterized antimicrobial materials. Common disadvantage thereof is, however, that they do not disclose a method to homogenize the antimicrobial materials into the compositions for pipe, but they are just implemented by simple mixing or blending. Such methods relying on dispersant or mechanical stirring can cause aggregation of the antimicrobial materials, which makes the dispersion not homogeneous, so that they are not reliable enough to be commercialized.

### SUMMARY OF THE INVENTION

The objective of the present invention is to solve above problems in prior arts, that is, to provide a method for preparing nano-silver organic-inorganic composite resin, which comprises preparing nano silver-ceramic composite comprising antimicrobial, nano-sized silver, providing homogenized nano-silver organic-inorganic composite resin sol by mixing the nano silver-ceramic composite with a polymer resin as plastic water pipe material using ultrasonic vibrator for the nano-silver particles to be very uniformly distributed, mixing the sol and a polymer resin while simultaneously pulverizing them utilizing a device for concurrently pulverizing and mixing, and thus providing the nano-silver organic-inorganic composite resin which contains nano-silver particles and has excellent antibiotic properties.

Furthermore, the objective of the present invention is to provide water pipe comprising the nano-silver organic-inorganic composite resin prepared by the above-mentioned method for producing the nano-silver organic-inorganic composite resin.

The method for preparing a nano-silver organic-inorganic composite resin according to the present invention to achieve the objective mentioned above comprises:
(1) synthesizing a nano silver-ceramic composite;
(2) preheating a first pulverized polymer resin;
(3) preparing a nano-silver organic-inorganic composite resin sol by putting the nano silver-ceramic composite from the step (1) into part of the first pulverized polymer resin from the step (2), followed by dispersion using ultrasonic vibrator; and
(4) preparing the nano-silver organic-inorganic composite resin by mixing and pulverizing simultaneously the rest of the first pulverized polymer resin from the step (2) and the nano-silver organic-inorganic composite resin sol from the step (3).

In the step (1), the nano silver-ceramic composite may be silver-hydroxyapatite.

In the step (2), the preheating may be performed at 40-80°C after pulverizing polymer resin into size of 2-1,000µm.

In the step (3), wetting and spreading agents may be further added.

In the step (3), the weight ratio of the first pulverized polymer resin from the step (2): the nano silver-ceramic composite from the step (1) may be 100:1 to 10:1.

In the step (4), the weight ratio of the rest of the first pulverized polymer resin from the step (2): the nano-silver organic-inorganic composite resin sol from the step (3) may be 50:1 to 1:1.

The step (4) may be performed using a device provided with sprayer for spraying the nano-silver organic-inorganic composite resin sol, stirrer and pulverizer.

The nano-silver organic-inorganic composite resin from the step (4) may comprise silver of 100-150ppm.

After the step (4), the method according to the present invention may further comprise (5) mixing the nano-silver organic-inorganic composite resin from the step (4) with a second polymer resin, followed by melting the resulted mixture.

The antimicrobial water pipe according to the present invention comprises an inner layer and an outer layer, wherein the inner layer may comprise the nano-silver organic-inorganic composite resin prepared by the method according to the present invention.

The antimicrobial water pipe according to the present invention may further comprise an intermediate layer between the inner layer and the outer layer.

The antimicrobial water pipe according to the present invention may has thickness ratio of the inner layer : the intermediate layer : the outer layer of 10-20%:60-80%:10-20%.

### INDUSTRIAL APPLIABILITY OF THE INVENTION

According to the present invention, it is possible to prepare homogenized nano-silver organic-inorganic composite resin sol by mixing nano silver-ceramic composite with a polymer resin as plastic water pipe material using ultrasonic vibrator for the nano-silver particles to be very uniformly distributed, and to obtain nano-silver organic-inorganic composite resin with uniformly distributed antimicrobial nano-silver particles having excellent antimicrobial and antibiotic properties by pulverizing and mixing simultaneously the sol with the polymer resin utilizing a device to concurrently pulverize and mix.

### BRIEF DESCRIPTION OF THE DRAWINGS

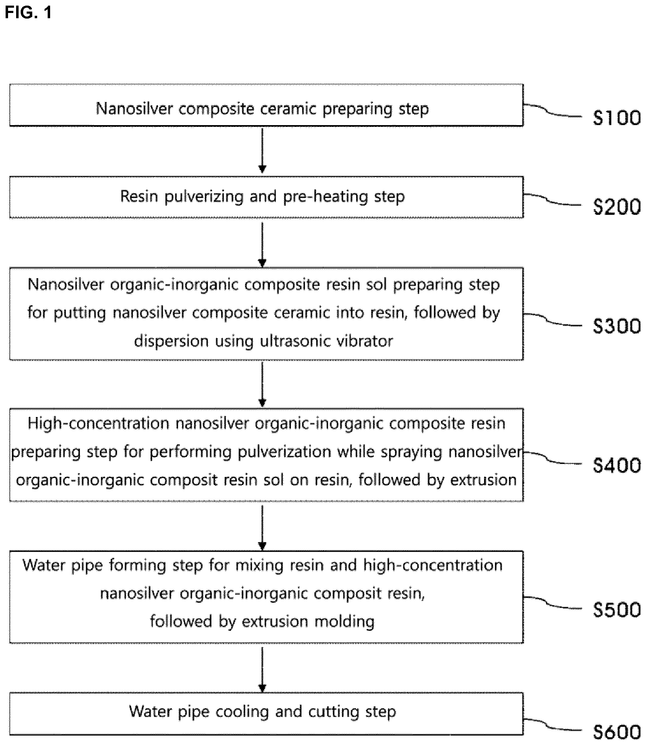

FIG. 1 is a flow diagram to illustrate the method for preparing nano-silver organic-inorganic composite resin utilizing UDEM (Ultrasonic Dispersion & Extrusion Method) and for manufacturing antibiotic water pipe comprising the nano-silver organic-inorganic composite resin prepared therefrom according to an embodiment of the present invention.

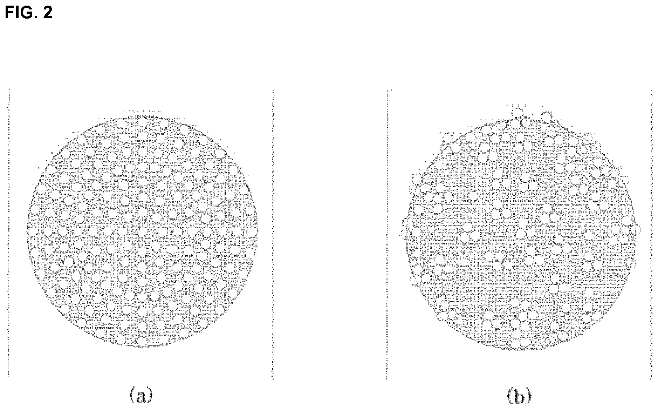

FIG. 2 is a schematic diagram to illustrate a distribution status of nano-silver particles in the nano-silver organic-inorganic composite resin from Example 1 (a) of the present invention and Comparative example 2 (b), respectively.
FIG. 3 is a schematic diagram of a device provided with a sprayer to spray the nano-silver organic-inorganic composite resin sol, stirrer/pulverizer with hammer-like blades, used in the Example 1.
FIG. 4 is a picture showing a distribution of nano-silver particles on surface of the nano-silver organic-inorganic composite resin from Example 1, Comparative example 1, and Comparative example 2.

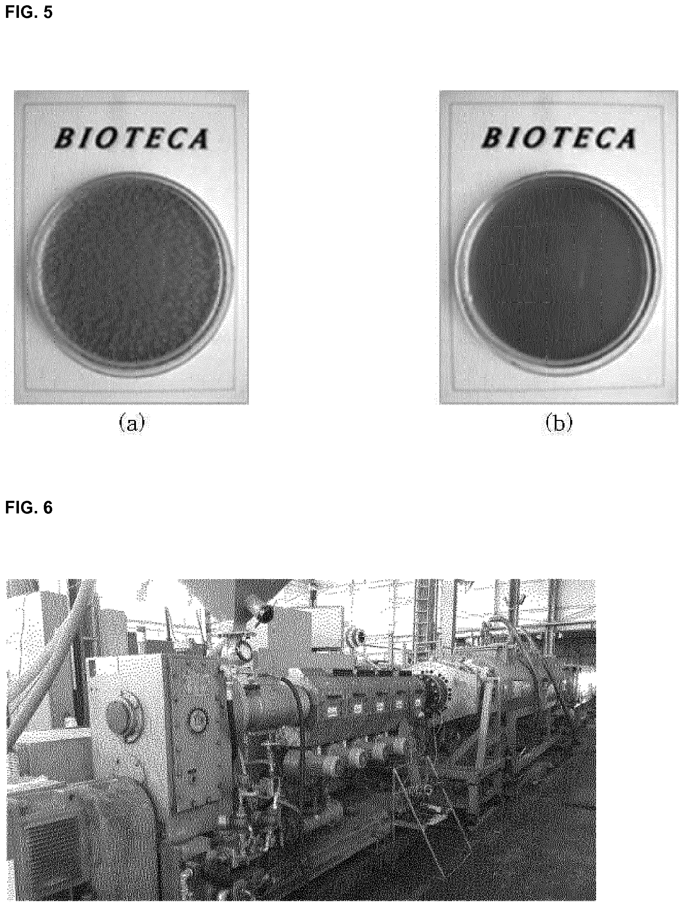

FIG. 5 is a picture showing the result from the biofilm formation test analysis of the antibiotic water pipe of Example 1 (a) and conventional water pipe of Comparative example 1.

### DETAILED DESCRIPTION OF THE INVENTION

The advantages and characterizations, and the method to achieve them will be obvious referring to embodiments described in detail with attached drawings. However, the present invention is not limited to the disclosed embodiments but rather can be implemented in various different ways, and the embodiments of the present invention are only provided to let a person with ordinary skill in the art where the present invention belongs to understand the invention, but the present invention is defined by the scope of the claims.

Unless otherwise defined, all the terms in this disclosure (including technical and scientific terms) may be used as the meaning a person with ordinary skill in the art can commonly understand. Furthermore, generally used terms defined in dictionary are not interpreted ideally or excessively unless otherwise defined.

In the present disclosure, "antibiotic" can be considered to mean both "antibacterial" and "antimicrobial."

Below, a method for preparing the nano-silver organic-inorganic composite resin is described in detail.

The method for preparing the nano-silver organic-inorganic composite resin according to the present invention comprises:
(1) synthesizing a nano silver-ceramic composite;
(2) preheating a first pulverized polymer resin;
(3) preparing a nano-silver organic-inorganic composite resin sol by putting the nano silver-ceramic composite from the step (1) into part of the first pulverized polymer resin from the step (2), followed by dispersion using ultrasonic vibrator; and
(4) preparing the nano-silver organic-inorganic composite resin by mixing and pulverizing simultaneously the rest of the first pulverized polymer resin from the step (2) and the nano-silver organic-inorganic composite resin sol from the step (3).

With regard to the step (1), the nano silver-ceramic composite may be preferably silver-hydroxyapatite, but not particularly limited as long as it contains nano-silver particles.

The silver-hydroxyapatite may be prepared by conventional synthesizing method, for example by adding phosphoric acid solution into a mixture of calcium hydroxide suspension and silver compound solution, followed by dry-aging over 80°C until 80% of moisture is removed, and then calcinating the resulting mixture at 650-1350°C, followed by pulverizing the resultant.

The particle size of the nano silver-ceramic composite may be 0.2-10µm, preferably 0.2-1,0µm. If the particle size is within the range, dispersibility of the nano-silver particles can be improved.

With regard to step (2), the preheating may be performed at 40-80°C after pulverizing a first polymer resin into size of 2-1,000µm.

The first polymer resin is not particularly limited, but may be, for example, one or more selected from polyethylene resin such as low density polyethylene (LDPE), linear low density polyethylene (LLDPE), high density polyethylene (HDPE), ethylene-vinyl acetate (EVA) and copolymers thereof; polystyrene resin such as high impact polystyrene (HIPS), general purpose polystyrene (GPPS) and styrene acrylonitrile (SAN); polypropylene resin such as homo polypropylene, random polypropylene, and copolymers thereof; acrylonitrile-butadiene-styrene terpolymer (ABS); poly(vinyl chloride) (PVC); engineering plastics such as nylon, polyethylene terephthalate, poly oxymethylene (acetal), polycarbonate (PC), urethane, resin powder, polymethyl methacrylate (PMMA), and polyether sulfone; and the like.

Furthermore, it will clearly appreciated by a person with ordinary skill in the art that without limiting to above-mentioned polymer resins, arbitrary natural or synthetic polymer resin or mixtures or combinations thereof can be used.

With regard to the step (2), it is advantageous to pulverize the first polymer resin into size of 2-1,000µm for dispersibility.

With regard to the step (2), a temperature for preheating the first pulverized polymer resin in a mixer or blender may be 40-80°C, preferably 45-60°C. If the preheating temperature is lower than 40°C, the nano silver-ceramic composite particles cannot be spread onto the polymer resin, and if the preheating temperature is higher than 80°C, the nano silver-ceramic composite particles may not be spread uniformly during later steps.

The preheating of the first pulverized polymer resin may be performed for 10-150 minutes, preferably 20-100 minutes, more preferably 30-70 minutes, while stirring it. In this case, a speed of the stirring is not particularly limited, but generally equal to or lower than 1,000 rpm, preferably 10-700rpm, more preferably 20-500rpm.

In the step (3), a nano-silver organic-inorganic composite resin sol containing the nano silver-ceramic composite uniformly dispersed therein may be prepared by putting part of the first pulverized polymer resin from the step (2) into a mixer, and then putting the nano silver-ceramic composite from the step (1), followed by mixing them using ultrasonic vibrator.

In the step (3), the mixing using ultrasonic vibrator may be performed at ultrasonic wave of 20-50kHz for 15-300 minutes to achieve good dispersion and emulsification.

In case that the ultrasonic vibrator is not utilized, but conventional mixing or blending methods are utilized, the nano-silver organic-inorganic composite resin sol is to be aggregated and not uniformly dispersed, so that the antibiotic effect will be considerably lowered.

With regard to the step (3), wetting/spreading agents may be further added for the nano silver-ceramic composite to be sufficiently spread onto the first pulverized polymer resin, if desired. The wetting/spreading agents are not particularly limited, but may be, for example, one ore more selected from ethylene glycol, propylene glycol, diethylene glycol, triethylene glycol, tetraethylene glycol, dipropylene glycol, tripropylene glycol, tetrapropylene glycol, polyethylene oxide, polypropylene oxide and ethylene oxide-propylene oxide copolymer and the like.

Furthermore, the wetting/spreading agents may be added in an amount of 1-10 parts by weight, preferably 1-6 parts by weight relative to 100 parts by weight of the mixture of the first pulverized polymer resin and the nano silver- ceramic composite used in the step (3).

With regard to the step (3), the weight ratio of the first pulverized polymer resin from the step (2): the nano silver- ceramic composite from the step (1) may be 100:1 to 10:1, preferably 70:1 to 20:1, because an antibiotic effect may not be enough when the weight ratio exceeds 100:1, and the dispersibility may get worse when it is less than 10:1 so that the nano silver- ceramic composite may be partially aggregated, which are not preferable.

In the step (4), a nano-silver organic-inorganic composite resin with improved antibiotic effect may be prepared by pulverizing and mixing simultaneously the rest of the first pulverized polymer resin from the step (2) and the nano-silver organic-inorganic composite resin sol prepared from the step (3).

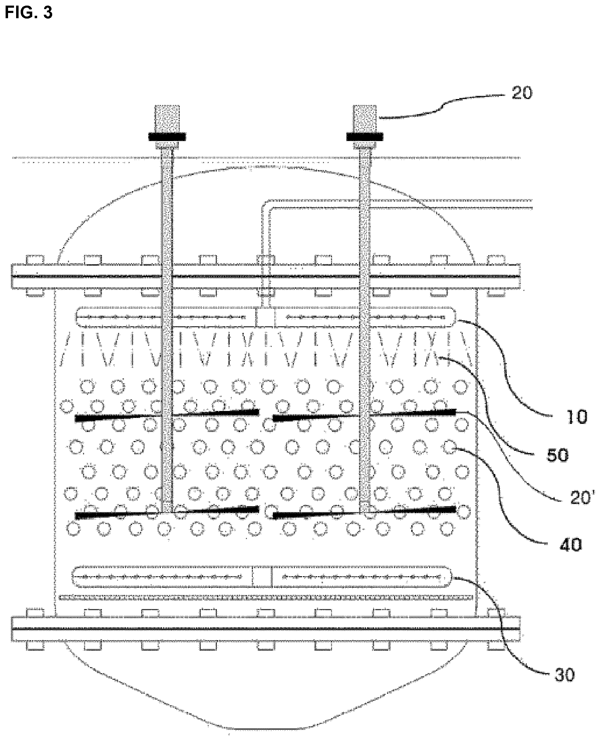

The step (4) may be performed using a device provided with sprayer for spraying the nano-silver organic-inorganic composite resin sol, stirrer/pulverizer such as the one illustrated in FIG. 3.

According to an embodiment of the present invention, in the step (3), putting the rest of the first pulverized polymer resin from the step (2) into a device illustrated in FIG. 3, spraying the nano-silver organic-inorganic composite resin sol prepared from the step (3) by the sprayer (10), and mixing while simultaneously pulverizing them into size of 0.1-2,000*µ*m, preferably 0.1-1,000*µ*m by a stirrer/pulverizer, for example the stirrer/pulverizer (20) having hammer-like blade (20') with hammer-like end. Preferably, the spraying and pulverizing/mixing process may be performed while air spraying via the air spray nozzle (30) at the bottom of the device. The resultant may be dried under 40-80°C for 1-24 hours, and prepared as chopped or pellet shaped nano-silver organic-inorganic composite resin by extrusion using an extruder. Preferably, the extrusion may be performed as melt-extrusion under the condition that the start temperature of the extruder is 140-170°C and the end temperature of the extruder is 200-250°C, and then the nano-silver organic-inorganic composite resin with nano silver- ceramic composite uniformly dispersed therein is prepared.

With regard to the step (4), the weight ratio of the rest of the first pulverized polymer resin from the step (2) : the nano-silver organic-inorganic composite resin sol produced from the step (3) may be 50:1 to 1:1, preferably 10:1 to 1:1, because the antibiotic effect may not be enough when the weight ratio exceeds 50:1, and the dispersibility may get worse when it is less than 1:1, which are not preferable.

Preferably, the nano-silver organic-inorganic composite resin from the step (4) may comprise silver in an amount of 100-150ppm, and if the amount of silver is out of the range, antibiotic effect is not enough and dispersibility may be decreased, which are not preferable.

The method for preparing the nano-silver organic-inorganic composite resin of the present invention, after step (4), may further comprise a step of (5) mixing the nano-silver organic-inorganic composite resin from the step (4) with a second polymer resin.

With regard to the step (5), the weight ratio of the nano-silver organic-inorganic composite resin from the step (4) to the second polymer resin may be 1:3.5 to 1:10, preferably 1:5 to 1:7, which is advantageous range considering economic efficiency, antibiotic effect, and properties as water pipe.

The second polymer resin is not particularly limited, but may be, for example, one or more selected from polyethylene resin such as low density polyethylene (LDPE), linear low density polyethylene (LLDPE), high density polyethylene (HDPE), ethylene-vinyl acetate (EVA) and copolymers thereof; polystyrene resin such as high impact polystyrene (HIPS), general purpose polystyrene (GPPS) and styrene acrylonitrile (SAN); polypropylene resin such as homo polypropylene, random polypropylene, and copolymers thereof; acrylonitrile-butadiene-styrene terpolymer (ABS); poly(vinyl chloride) (PVC); engineering plastics such as nylon, polyethylene terephthalate, poly oxymethylene (acetal), polycarbonate (PC), urethane, resin powder, polymethyl methacrylate (PMMA), and polyether sulfone; and the like. The first polymer resin and the second polymer resin may be identical or different.

The antibiotic water pipe according to the present invention comprises the nano-silver organic-inorganic composite resin prepared by the method according to the present invention. The structure of the antibiotic water pipe of the present invention is not particularly limited, but may be single- or multi-layered structure.

In an embodiment or the present invention, the antibiotic water pipe may have a single-layered structure comprising the nano-silver organic-inorganic composite resin.

In another embodiment of the present invention, the antibiotic water pipe of the present invention may have a multi-layered structure, for example double-layered of inner layer and outer layer, wherein the inner layer may comprise the nano-silver organic-inorganic composite resin, and preferably, both the inner layer and the outer layer may comprise the nano-silver organic-inorganic composite resin.

In a preferable embodiment, the antibiotic water pipe of the present invention may have triple-layered structure of inner layer, intermediate layer, and outer layer, wherein the inner layer may comprise the nano-silver organic-inorganic composite resin, or at least one of the intermediate layer and the outer layer, as well as the inner surface layer, may comprise the nano-silver organic-inorganic composite resin.

With regard to the outer layer of the double-layered antibiotic water pipe, and the intermediate layer and the outer layer of the triple-layered antibiotic water pipe may be made of general materials for multi-layered water pipes, without any limits, for example polyolefin resin composition, preferably high density polyethylene resin composition or poly vinyl chloride (PVC) resin composition. Preferably, the intermediate layer may comprise polyolefin resin composition, and the outer layer may comprise fiber-reinforced PVC resin composition.

The thickness ratio of the inner layer, the intermediate layer, and the outer layer may be 10-20%:60-80%:10-20%.

The antibiotic water pipe of the present invention is not limited by the exampled structures.

The formed water pipe is to be finished by cooling according to a conventional water pipe manufacturing process, followed by cutting in certain length.

### Examples and Comparative examples

### Example 1

### <Preparation of nano silver- ceramic composite powder>

Calcium hydroxide 37g was put in 450ml of distilled water to prepare a suspension, and 100ml of 0.29M silver nitrate solution was slowly put into the suspension with stirring, followed by further stirring for 24 hours. 36.5g of phosphoric acid solution in 450ml of distilled water was slowly put into the resulted solution with stirring to obtain a precursor mixture of silver-hydroxyapatite. The resulting precursor mixture was dry-aged until 80-85% of the moisture was removed, followed by dried at around 120°C until the water content was lower than 1%. The resulting white cake-like mixture was calcinated at 850°C to obtain silver-hydroxyapatite composite. 2kg of the obtained silver-hydroxyapatite was put into 8L of distilled water, dispersed by stirring at 300rpm, followed by wet-classification via 400 mesh sieve and drying in a dryer for removing remained moisture, to obtain silver-hydroxyapatite powder as nano silver-ceramic composite powder.

### <Preparation of first pulverized polymer resin>

High density polyethylene was pulverized into size of 2-1,000µm, and then the pulverized resin was preheated at 60°C for 50 minutes with stirring at 300rpm.

### <Preparation of nano-silver organic-inorganic composite resin sol>

The preheated high density polyethylene was put into a mixer, and the nano silver-ceramic composite powder (silver-hydroxyapatite) and wetting and spreading agent were added thereto, followed by dispersion using an ultrasonic vibrator at frequency of 20kHz for 30 minutes for dispersion and emulsification, to obtain nano-silver organic-inorganic composite resin sol containing the nano silver-ceramic composite uniformly distributed therein. Here, the weight ratio of the high density polyethylene: the nano silver-ceramic composite was 30:1.

### <Preparation of nano-silver organic-inorganic composite resin>

The rest of the first pulverized polymer resin was put into a device provided with sprayer, stirrer/pulverizer with hammer-like blades and air-spray nozzle such as the one illustrated in FIG. 3, such that the weight ratio of the rest of the first pulverized polymer resin : the nano-silver organic-inorganic composite resin sol is 50:1, and then the nano-silver organic-inorganic composite resin sol was uniformly spread onto the surface of the first pulverized polymer resin via the sprayer of the above device while spraying air by the air-spray nozzle, followed by simultaneous mixing and pulverizing into 0.1-1,000*µ*m using the stirrer/pulverizer. The resultant was dried at 60°C for 5 hours, and the resulting dried, pulverized product was extruded into pellets under a condition of start temperature of 150°C and end temperature of 230°C to obtain nano-silver organic-inorganic composite resin. Next, the nano-silver organic-inorganic composite resin was mixed with high density polyethylene as a second polymer resin in the weight ratio of 1:5, to obtain final nano-silver organic-inorganic composite resin. Here, the silver content in the final nano-silver organic-inorganic composite resin was 130ppm.

### <Manufacturing the antibiotic water pipe>

A water pipe composed of an inner layer comprising the final nano-silver organic-inorganic composite resin, an intermediate layer formed as a pipe shape with cavity from high density polyethylene and strongly attached spirally onto outer surface of the inner layer, and an outer layer made of PVC resin composition comprising carbon fiber was manufactured, and the thickness ratio of the inner layer, the intermediate layer and the outer layer was 15%:70%:15%.

### Comparative example 1

A water pipe made of high density polyethylene was manufactured.

### Comparative example 2

A water pipe was manufactured in a same way to the Example 1, except the mixing in the step of <Preparation of nano-silver organic-inorganic composite resin> was performed using a conventional stirrer device, instead of the above stirrer/pulverizer device, without simultaneous pulverization.

### <Antibiotic activity and biofilm formation test>

The antibiotic activity and biofilm formation test was performed three times each for the Example1, the Comparative example 1, and the Comparative example 2, and the results are shown in the Table 1 below.

**[Table 1]**

| | | EEA¹⁾ (RFU²⁾) | HPC (CFU/cm²) | Coliform group(CFU/cm²) | | | Injured Enterobacteriaceae (CFU/cm²) | CLPP | | | |
|---|---|---|---|---|---|---|---|---|---|---|---|
| | | | | Total coliforms | Fecal coliforms | Streptococcus | | N³⁾ | AWCD⁴⁾ | MPI⁵⁾ | H⁶⁾ |
| Comp. exam. 1 | 1 | 27.3 | 0 | 0 | 0 | 0 | 130±8 | 78 | 1.25 | 137.1 | 4.27 |
| | 2 | 35.0 | 0 | 0 | 0 | 0 | 187±17 | 78 | 1.11 | 121.2 | 4.27 |
| | 3 | 44.4 | 0 | 0 | 0 | 0 | 126±6 | 71 | 1.00 | 111.2 | 4.17 |
| Comp. exam. 1 | 1 | 8.1 | 0 | 0 | 0 | 0 | 100±8 | 55 | 0.92 | 91 | 3.95 |
| | 2 | 10.5 | 0 | 0 | 0 | 0 | 127±17 | 49 | 0.98 | 95 | 4.10 |
| | 3 | 11.7 | 0 | 0 | 0 | 0 | 106±6 | 60 | 1.00 | 110 | 3.90 |
| Exam. 1 | 1 | 10.5 | 0 | 0 | 0 | 0 | 21±3 | 65 | 1.13 | 121.6 | 4.10 |
| | 2 | 0 | 0 | 0 | 0 | 0 | 4±1 | 45 | 0.76 | 81.5 | 3.73 |
| | 3 | 12.7 | 0 | 0 | 0 | 0 | 9±0 | 49 | 0.78 | 86.3 | 3.80 |

| | | | | | | | | | | | |
|---|---|---|---|---|---|---|---|---|---|---|---|
| Note) 1) Extracellular Enzyme Activity 2) Relative fluorescence unit 3) Total number of positive wells with A 590 >0.25 4) Average well color development 5) Metabolic potential index 6) Shannon diversity index | | | | | | | | | | | |

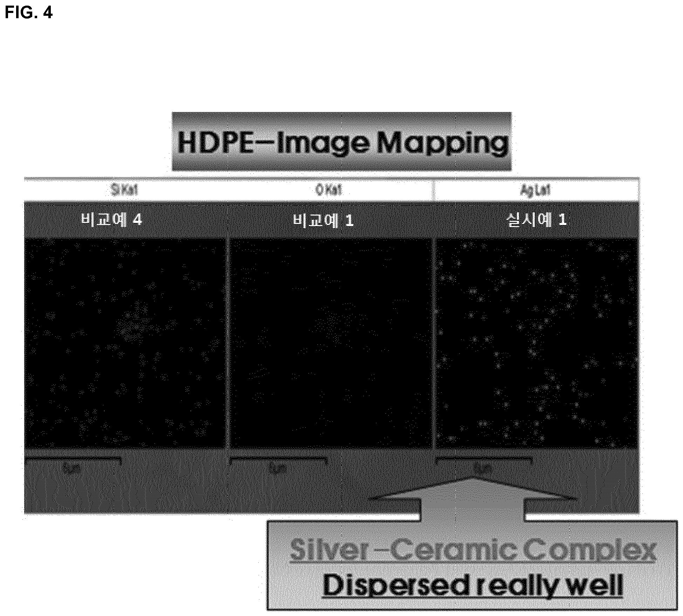

FIG. 4 shows the antibiotic activity test results, (a) of FIG. 4 is the antibiotic activity test result of the water pipe of Comparative example 2, and (b) is the antibiotic activity test result of the water pipe of Example 1, which shows the antibiotic activity of the water pipe of Example 1 is very excellent.

Furthermore, as shown in the Table 1, the value of injured enterobacteriaceae in case of the water pipe of Example 1 is much lower than those of Comparative examples 1 and 2, which means the antibiotic activity of the water pipe of Example 1 is very excellent.

### [Reference Numerals]

10: sprayer
20: stirrer/pulverizer
20': hammer-like blade
30: air spray nozzle
40: first pulverized polymer resin
50: nano-silver organic-inorganic composite resin sol

## Claims

1. A method for preparing nano-silver organic-inorganic composite resin comprising:
(1) synthesizing a nano silver-ceramic composite;
(2) preheating a first pulverized polymer resin;
(3) preparing a nano-silver organic-inorganic composite resin sol by putting the nano silver-ceramic composite from the step (1) into part of the first pulverized polymer resin from the step (2), followed by dispersion using ultrasonic vibrator; and
(4) preparing the nano-silver organic-inorganic composite resin by mixing and pulverizing simultaneously the rest of the first pulverized polymer resin from the step (2) and the nano-silver organic-inorganic composite resin sol from the step (3).

2. The method according to claim 1, wherein the nano silver-ceramic composite in the step (1) is silver-hydroxyapatite.

3. The method according to claim 1, wherein the preheating in the step (2) is performed at 40-80°C after pulverizing polymer resin into size of 2-1,000µm.

4. The method according to claim 1, wherein wetting and spreading agents are further added in the step(3).

5. The method according to claim 1, wherein the weight ratio of the first pulverized polymer resin from the step (2) : the nano silver-ceramic composite from the step (1) is 100:1 to 10:1.

6. The method according to claim 1, wherein the weight ratio of the rest of the first pulverized polymer resin from the step (2) : the nano-silver organic-inorganic composite resin sol from the step (3) is 50:1 to 1:1.

7. The method according to claim 1, the step (4) is performed using a device provided with sprayer for spraying the nano-silver organic-inorganic composite resin sol, and stirrer/pulverizer with hammer-like blades for simultaneous mixing and pulverizing.

8. The method according to claim 1, wherein the nano-silver organic-inorganic composite resin from the step (4) comprises silver of 100-150ppm.

9. The method according to one of claim 1 to 8, wherein after the step (4), further comprising (5) mixing the nano-silver organic-inorganic composite resin from the step (4) with a second polymer resin, followed by melting the resulted mixture.

10. Antibiotic water pipe comprising an inner layer and an outer layer, wherein the inner layer comprises the nano-silver organic-inorganic composite resin prepared by the method according to one of claims 1 to 9.

11. The antibiotic water pipe according to claim 10, further comprising an intermediate layer between the inner layer and the outer layer.

12. The antibiotic water pipe according to claim 11, wherein the thickness ratio of the inner layer, the intermediate layer, and the outer layer is 20%:60-80%:10-20%.
